# EUROPEAN PATENT SPECIFICATION

(11) **EP 3 154 658 B1**
(45) Date of publication and mention of the grant of the patent: **18.03.2020**
(21) Application number: 15734271.8
(22) Date of filing: 16.06.2015
(51) Int. Cl.: B01D 35/05, B01D 29/11, B01D 29/21, B01D 29/58, B01D 29/64, B01D 29/68, E02F 7/06

(54) **HOPPER DREDGER WITH FILTER OVERFLOW DEVICE**
BAGGERSCHIFF MIT EINER FILTERÜBERLAUFVORRICHTUNG
DRAGUEUR AVEC DISPOSITIF DE TROP-PLEIN FILTRANT

(30) Priority: 16.06.2014 NL 2013004
(43) Date of publication of application: 19.04.2017
(73) Proprietor: IHC Holland IE B.V., 3361 EP Sliedrecht (NL)
(72) Inventor: KOEVOETS, Adrianus Josephus Petrus Marie, NL-4882 NR Klein Zundert (NL)
(74) Representative: Nederlandsch Octrooibureau
(86) International application number: PCT/NL2015/050439
(87) International publication number: WO 2015/194948

(56) References cited:
- WO-A1-2010/122093
- DE-A1- 3 805 361
- FR-A2- 2 059 451

## Description

### BACKGROUND

Trailing suction hopper dredgers ("TSHD") are vessels which can be used to dredge at sea or in open water. TSHD's typically use a suction tube, one end of which can be lowered to the seabed and used to suck up solids such as sand, sludge, silt, mud or sediment, mixed with water. The lower end of this suction tube can be provided with a suction head or a drag head. The solid material mixed with water is pumped through the suction tube into a hopper of the dredging vessel. The mixture is reduced in speed when in the dredger hopper, and this speed reduction allows for the settling of components suspended in the mixture. Excess water is then overflowed out of the hopper to allow for more load capacity within the TSHD.

The overflow typically contains both heavy and light fractions of mud and silt, as mud and silt normally do not settle quickly. This overflow volume is then released via the bottom of the dredging vessel. The suspension of particles still in the overflow as well as the interactions between the overflow volume released, the hull, propellers, speed of the vessel and currents; typically form a plume in the wake of the dredging process. One method to combat this plume is disclosed in WO 2013/119107. A passive overflow device is used to drain away head water and flow it through a conduit to an outlet abutting the sea bottom to deliver the head water close to the sea bottom, thereby minimizing the influence on sea life. U.S. Pat. No. 3,975,842 discloses a system which also attempts to minimize the environmental effects by directing the overflow to the suction head to be used as the liquid supply for loosening the soil to be suctioned, thus forming a closed system where the overflow is recycled.

EP 0642817 introduces a filter formed of plates for helping separate suspended particles within the hopper. The unit is located in the hopper, is separate from the overflow, and works to filter only some of the liquid flowing in the direction of the overflow by screening off some of the liquid so that settlement can occur.

WO 2010/122093 disclose a dredging vessel with an overflow pipe.

When dredging mainly or only very fine particles, for example, pure silt, the particles typically do not settle quickly, and therefore overflow systems are not used. This results in a decreased load capacity of the vessel.

### SUMMARY

According to a first aspect, a hopper dredger comprises an overflow system for draining away head water standing above settled fractions in a dredge loading, wherein said overflow system comprises a filtering device and wherein said hopper dredger is defined according to claim 1.

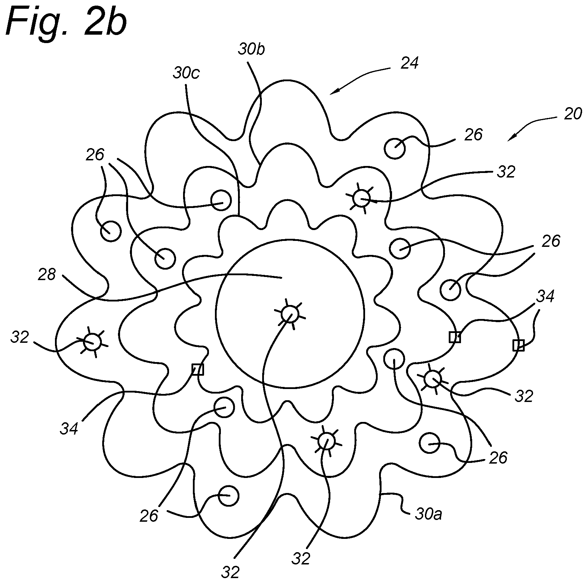

As clearly shown in Figs.2b-3, the filtering device includes at least one filtering layer, and the fractions outlet is coupled with the filtering device downstream from at least one filtering layer.

Such an overflow system is able to collect small particles and fractions thereby cleaning water flowing through the overflow system.

According to an embodiment, the filtering device comprises at least one mesh layer. Optionally, at least one mesh layer is pleated.

According to an embodiment, the at least one mesh layer comprises fabric and/or a woven material.

According to an embodiment, the overflow system further comprises means for rinsing the fractions from the filtering device.

According to an embodiment, the means for rinsing the fractions from the filtering device comprises at least one nozzle. Optionally, the at least one nozzle can rinse the fractions with a pulsating spray.

According to an embodiment, wherein the filtering device comprises a plurality of mesh layers.

According to an embodiment, the filtering device further comprises means for rinsing the fractions from each of the plurality of mesh layers. Optionally, the means for rinsing the fractions comprises at least one nozzle spraying towards each of the plurality of mesh layers.

According to an embodiment, the filtering device comprises means for vibrating at least one mesh layer.

According to an embodiment, the mesh layers are concentric.

According to an embodiment, the overflow system is used in a hopper dredger.

According to an embodiment, the overflow system is for draining away head water standing above settled particles in a dredge loading space and the overflow system inlet receives the head water. Optionally, the fractions outlet transports the fractions towards the dredge loading space.

According to a second aspect of the invention, a method of separating suspended fractions from a fluid in a hopper dredger with a loading space is defined according to claim 8.

According to an embodiment, the filtering device comprises at least one mesh layer. Optionally, the at least one mesh layer is pleated.

According to an embodiment, the liquid is head water standing above settled fractions in a loading space, and the method further comprises flowing the fractions back to the loading space.

According to an embodiment, the step of flowing the fractions back to the loading space comprises rinsing the fractions from the filtering device toward a fractions outlet coupled with the loading space.

According to an embodiment, the rinsing is done with one or more pulsating sprays.

According to an embodiment, the step of flowing the fractions back to the loading space comprises using vibrating means to vibrate the at least one mesh layer.

### BRIEF DESCRIPTION OF THE DRAWINGS

Fig. 1 illustrates a trailing suction hopper dredger during a dredging operation.
Fig. 2a shows a perspective view of a dredger hopper and an overflow system.
Fig. 2b shows a top view of the overflow system of Fig. 2a.
Fig. 2c shows a close up perspective view of a pleat of the overflow system of Fig. 2a.
Fig. 3 shows a top view of a second embodiment of an overflow system.

### DETAILED DESCRIPTION

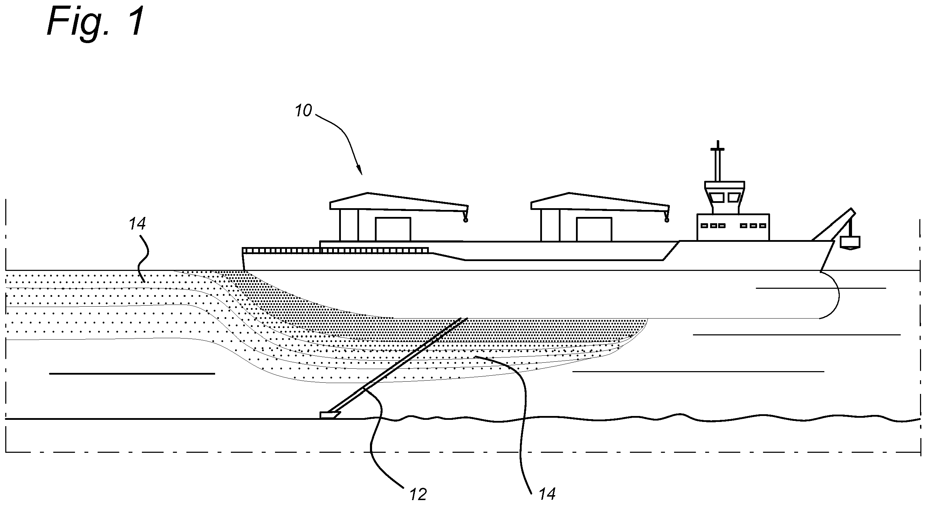

FIG. 1 illustrates a trailing suction hopper dredger ("TSHD") 10 during a dredging operation. Trailing suction hopper dredger 10 is suctioning a mixture of water and solid particles through suction tube 12. This mixture is then transported to a hopper in THSD 10 (not shown). Excess liquid in the hopper is overflowed, and due to still suspended particles in the liquid, as well as the interaction between the liquid released with the hull, propellers, and currents; plume 14 forms.

Plume 14 can have an adverse impact on local marine biotope, as it reduces the entrance of light into the water body. Additionally, in some cases, the settling particles smother bottom life, and the suspensions can reduce the ability for microorganisms to develop. Filtering suspended mud, silt and fine sand components from the overflow mixture can structurally reduce turbidity and therefore reduce the adverse impact of the dredging process on the environment.

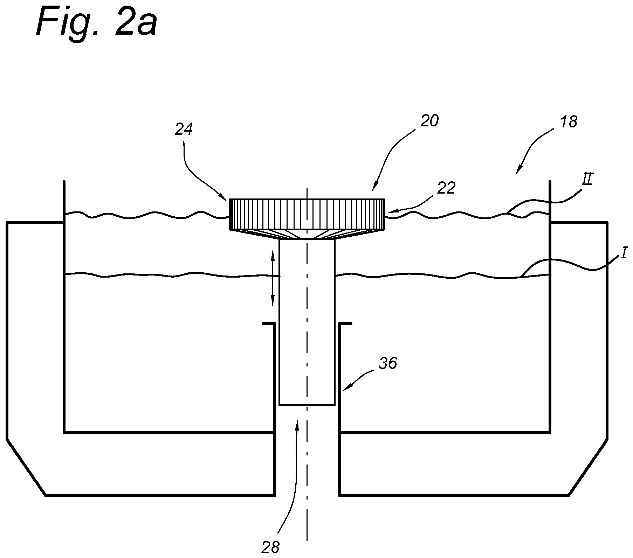

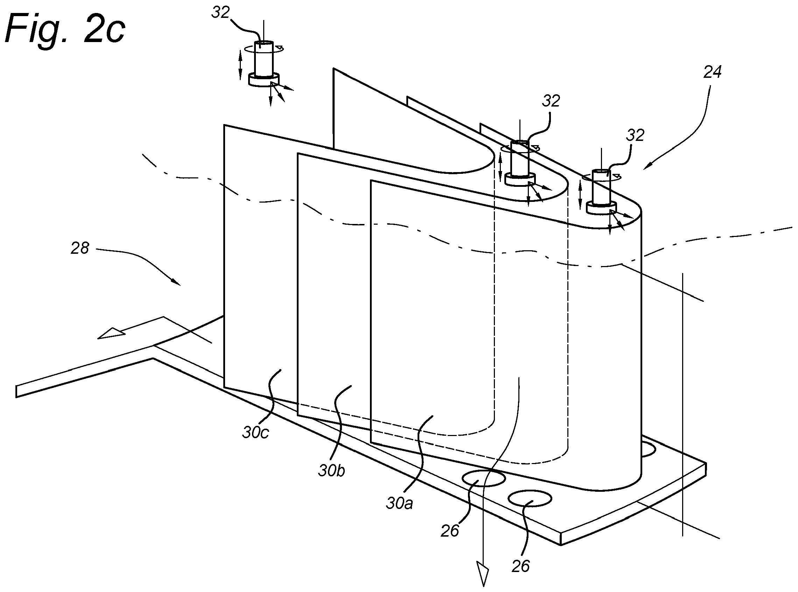

FIG. 2a illustrates a perspective view of a dredger hopper 18 or a loading space within a TSHD, and overflow system 20 which can filter an overflow mixture, reducing suspended particles or fractions in the liquid released from overflow system back into a liquid body. Fig. 2b shows a top view of the overflow system 20, and Fig. 2c shows a close up perspective view of a pleat of overflow system 20. The terms "particle" and "fractions" are used interchangeably referring to small particles which can be suspended in a liquid, for example, sand, silt, sludge, mud or any other material being dredged.

Overflow system 20 includes inlet 22, filtering device 24, fractions outlets 26 and fluid outlet 28. Filtering device 24 includes mesh layers 30a, 30b, 30c; nozzles 32 and vibrating devices 34. Inlet 22 is shown as a radial inlet with a cone shaped funnel, but can be other shapes in other embodiments.

Overflow system 20 connects to a supporting structure 36 in hopper 18 to sit vertically for draining away head water standing above settled particles in dredger hopper 18. Overflow system 20 can have a similar or identical outer profile to past overflow systems, allowing for easy removal of past systems and insertion of overflow system 20. Overflow system 20 can vary in height to overflow liquid in hopper 18 at different levels. For example, when hopper 18 is in the process of being loaded, overflow system 20 can be increased in height so that overflow inlet 22 stays above the level where settlement is occurring.

In the embodiment shown, filtering device 24 includes three mesh layers 30a, 30b, 30c; but other embodiments could have more or fewer mesh layers. Mesh layers 30a, 30b, 30c are pleated and concentric. The pleats in mesh layers 30a, 30b, 30c can allow for the collection of more suspended material. Mesh layers 30a, 30b, 30c can be made of woven materials, for example, cloth, fabric or a fine grid or screen to collect small particles or fractions suspended in the head water, and allow the liquid to pass through. Mesh layers 30a, 30b, 30c can be the same material for all mesh layers 30a, 30b, 30c or can be different materials with different size holes and/or a variation in weave to be able to trap increasingly smaller fractions from outer mesh layer 30a to inner mesh layer 30c. For example, outer mesh layer 30a can be a coarse mesh layer while inner mesh layer 30c can be a fine mesh layer. Mesh layers 30a, 30b, 30c can also be specifically designed for the materials to be dredged, for example, when dredging fine materials, a more tightly woven cloth or fabric may be used than when dredging materials with larger particles.

Filtering device 24 includes a plurality of nozzles 32. Nozzles 32 can be rotating nozzles and/or can be able to rinse the fractions with a pulsating spray. The ability to rotate and/or rinse with a pulsating spray can make it so that nozzles 32 are able to effectively dislodge trapped fractions from all parts of mesh layers 30a, 30b, 30c. Other embodiments can have more or fewer nozzles and/or other means for rinsing fractions from filtering device 24. Additionally, nozzles 32 can be located and/or oriented differently for rinsing of the particles and/or factions from mesh layers 30a, 30b, 30c.

In operation, as discussed above, TSHD suctions a mixture of liquid and fractions, and deposits that mixture into dredger hopper 18. The head water in dredger hopper 18 continues to rise as particles and fractions settle (position I of Fig. 2a). When the head water reaches the level of inlet 22 (see liquid position II of Fig. 2a), the head water enters overflow system 20 through inlet 22. Inlet 22 is fluidly coupled to filtering device 24, so head water flows through mesh layers 30a, 30b, 30c in filtering device 24. The static overflow head pressure forces the continuous process. Mesh layers 30a, 30b, 30c trap fractions suspended in head water, and allow liquid to pass through. Filtered liquid can then exit overflow system 20 and TSHD through fluid outlet 28.

Fractions and/or particles suspended or trapped by mesh layers 30a, 30b, 30c can be dislodged to flow back into dredger hopper 18 through fractions outlets 26 through the use of nozzles 32 and/or vibrating devices 34. Nozzles 32 can spray to dislodge fractions from mesh layers 30 and rinse them in the direction of outlets 26, which empty into dredger hopper 18. Vibrating devices 34 can cause mesh layers 30a, 30b, 30c to vibrate, promoting the dislodging of fractions from mesh layers 30a, 30b, 30c.

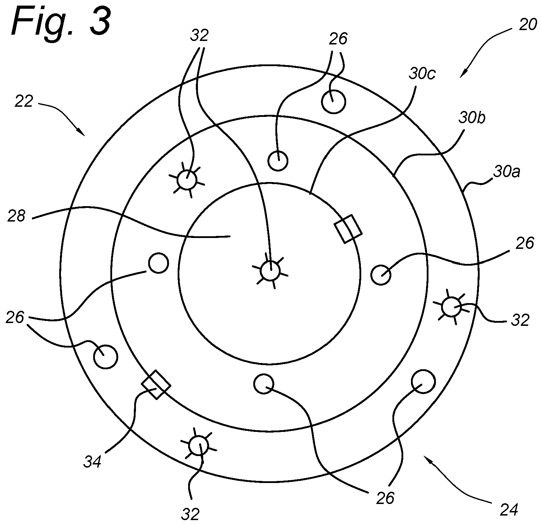

Fig. 3 shows a top view of a second embodiment of an overflow system 20, with inlet 22, filtering device 24, fractions outlets 26 and fluid outlet 28. Filtering device 24 includes mesh layers 30a, 30b, 30c; nozzles 32 and vibrating devices 34.

In this embodiment mesh layers 30a, 30b, 30c are not pleated. This means that they have less surface are a for trapping suspended particles, but can make filtering device 24 easier and cheaper to manufacture. Additionally, filtering device 24 could be formed to fit on or in existing overflow systems, allowing for a simple modification to then be able to collect fine particles or fractions as part of overflow system.

By using a filtering device 24, fractions outlets 26 and liquid outlet 28, overflow system 20 can work to filter overflow from a vessel, thereby reducing or preventing any plume generated in the wake when the overflow is deposited overboard. As mentioned above, depositing overflow or head water overboard a vessel can cause a plume in the wake due to the particles or fractions still suspended in the overflow liquid and the interactions of that overflow liquid with the hull, propellers and currents. This plume can have an adverse environmental impact on the water body and life within the water body. By filtering overflow liquid using mesh layers 30a, 30b, 30c within overflow device 20, all overflow liquid is filtered, and the overflow liquid deposited back into water body has reduced particle or fractions suspension. Therefore, plume generation as a result of liquid being released through overflow system 20 fluid outlet 28 into a water body is reduced or eliminated. The use of means 32 for rinsing fractions from the filtering device and/or vibrating means 34 helps the fractions collected or trapped in meshed layers 30 to flow through outlets 26 to hopper 18 for collection and settlement.

Additionally, overflow system 20 with meshed layers 30a, 30b, 30c allows for the use of an overflow system when dredging mixtures with very fine particles, for example, mud or silt. When dredging fine particles in past systems, overflow systems were typically not used. The settling speed of silt or other fine particles is too low. Thus, the density in the mixture flowing through past overflow systems was almost the same as the density of the dredged mixture. The lack of use of an overflow system when dredging fine particles greatly reduced the load capacity of the vessel. By using meshed layers 30a, 30b, 30c to capture suspended fine particles or fractions, overflow system 20 can filter head water containing fine particles or fractions. This allows overflow system 20 to be used even when dredging fine particles or fractions that do not settle quickly. The overflow can be filtered to reduce the suspended particles or fractions, allowing for disposal of the filtered water overboard through outlet 28 and for the collection and eventual flow of fractions back to dredge hopper 18 through fractions outlets 26. Thus, the ability to use overflow system 20 during dredging of fine particles increases vessel capacity for dredging operations.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Hopper dredger (10) comprising an overflow system (20) for draining away head water standing above settled fractions in a dredge loading space, the overflow system comprising:
- an inlet (22) for taking in head water;
- a filtering device (24) with at least one filtering layer (30), fluidly coupled with the inlet so that the head water entering the inlet flows through the at least one filtering layer and the at least one filtering layer filters at least some suspended fractions from the head water by allowing head water through the filtering layer but preventing the at least some suspended fractions from flowing through with the head water;
- a fractions outlet (26) coupled with the filtering device for transport of the at least some suspended fractions away from the overflow system and back into a hopper; and
- a fluid outlet (28) downstream from the filtering device and the fractions outlet for draining water which has been filtered by the filtering device from the overflow system.

2. Hopper dredger of claim 1, wherein the filtering device comprises at least one mesh layer, preferably wherein the at least one mesh layer comprises fabric and/or a woven material.

3. Hopper dredger of any of the preceding claims, and further comprising
- means for rinsing the at least some suspended fractions from the filtering device, preferably wherein the means for rinsing the at least some suspended fractions from the filtering device comprises at least one nozzle (32), more preferably wherein the at least one nozzle can rinse the at least some suspended fractions with a pulsating spray.

4. Hopper dredger of any of claims 2-3, wherein the filtering device comprises means for vibrating at least one mesh layer.

5. Hopper dredger of any of the preceding claims, wherein the filtering device comprises a plurality of mesh layers which are concentric.

6. Hopper dredger of claims 2-5, wherein at least one mesh layer is pleated.

7. The hopper dredger of any of the preceding claims, wherein the fractions outlet transports the at least some suspended fractions toward the dredge loading space.

8. A method of separating suspended fractions from a fluid in a hopper dredger with a loading space, the method comprising:
flowing the liquid into an overflow system through an inlet;
flowing all of the liquid in the overflow system into a filtering device fluidly coupled to the inlet to separate the suspended fractions from the liquid;
flowing the suspended fractions from the filtering device through a fractions outlet connecting back to the loading space; and
draining the separated liquid from the overflow system.

9. The method of claim 8, wherein the filtering device comprises at least one mesh layer.

10. The method of claim 8, wherein the step of flowing the suspended fractions back to the loading space comprises:
rinsing the suspended fractions from the filtering device toward a fractions outlet coupled with the loading space.

11. The method of claim 10, wherein the rinsing is done with one or more pulsating sprays.

12. The method of any of claims 8-11, wherein the step of flowing the suspended fractions back to the loading space comprises:
using vibrating means to vibrate the at least one mesh layer.

13. The method of any of claims 8-12, wherein the at least one mesh layer is pleated.

## Patentansprüche

1. Hopperbagger (10) umfassend ein Überlaufsystem (20) zum Ablassen von Oberwasser, das über sich gesetzten Teilchen in einem Baggerladeraum steht, wobei das Überlaufsystem umfasst:
- einen Einlass (22) zum Aufnehmen von Oberwasser;
- eine Filtervorrichtung (24) mit wenigstens einer Filterschicht (30), die mit dem Einlass fluidmäßig verbunden ist, so dass das Oberwasser, das in den Einlass eintritt, durch die wenigstens eine Filterschicht fließt und wobei die wenigstens eine Filterschicht wenigstens einige Schwebeteilchen aus dem Oberwasser filtert, indem Oberwasser durch die Filterschicht gelassen wird, aber die wenigstens einigen Schwebeteilchen am Durchfließen mit dem Oberwasser gehindert werden;
- einen Teilchenauslass (26), der mit der Filtervorrichtung verbunden ist, zum Transportieren von den wenigstens einigen Schwebeteilchen weg von dem Überlaufsystem und zurück in einen Hopper; und
- einen der Filtervorrichtung und dem Teilchenauslass nachgeschalteten Flüssigkeitsauslass (28) zum Ablassen von Wasser, welches von der Filtervorrichtung gefiltert wurde, aus dem Überlaufsystem.

2. Hopperbagger nach Anspruch 1, wobei die Filtervorrichtung wenigstens eine Gewebeschicht umfasst, wobei die wenigstens eine Gewebeschicht vorzugsweise Stoff und/oder gewebtes Material umfasst.

3. Hopperbagger nach einem der vorangehenden Ansprüche, und ferner umfassend
- Mittel zum Spülen der wenigstens einigen Schwebeteilchen aus der Filtervorrichtung, wobei die Mittel zum Spülen der wenigstens einigen Schwebeteilchen aus der Filtervorrichtung vorzugsweise wenigstens eine Düse (32) umfassen, wobei die wenigstens eine Düse die wenigstens einigen Schwebeteilchen besonders bevorzugt mit einem pulsierendem Sprühstrahl spülen kann.

4. Hopperbagger nach einem der Ansprüche 2-3, wobei die Filtervorrichtung Mittel zum Rütteln wenigstens einer Gewebeschicht umfasst.

5. Hopperbagger nach einem der vorangehenden Ansprüche, wobei die Filtervorrichtung eine Vielzahl von Gewebeschichten umfasst, die konzentrisch sind.

6. Hopperbagger nach einem der Ansprüche 2-5, wobei wenigstens eine Gewebeschicht gefaltet ist.

7. Hopperbagger nach einem der vorangehenden Ansprüche, wobei der Teilchenauslass die wenigstens einigen Schwebeteilchen in Richtung des Baggerladeraums transportiert.

8. Verfahren zum Trennen von Schwebeteilchen aus einer Flüssigkeit in einem Hopperbagger mit einem Laderaum, wobei das Verfahren umfasst:
Fließen der Flüssigkeit durch einen Einlass in ein Überlaufsystem;
Fließen der gesamten Flüssigkeit in dem Überlaufsystem in eine Filtervorrichtung die mit dem Einlass fluidmäßig verbunden ist, um die Schwebeteilchen von der Flüssigkeit zu trennen;
Fließen der Schwebeteilchen von der Filtervorrichtung durch einen Teilchenauslass, der zurück an den Laderaum verbindet; und
Ablassen der getrennten Flüssigkeit aus dem Überlaufsystem.

9. Verfahren nach Anspruch 8, wobei die Filtervorrichtung wenigstens eine Gewebeschicht umfasst.

10. Verfahren nach Anspruch 8, wobei der Schritt des Fließens der Schwebeteilchen zurück zu dem Laderaum umfasst:
Spülen der Schwebeteilchen aus der Filtervorrichtung in Richtung eines Teilchenauslasses, der mit einem Laderaum verbunden ist.

11. Verfahren nach Anspruch 10, wobei das Spülen mit einem oder mehreren pulsierenden Sprühstrahlen erfolgt.

12. Verfahren nach einem der Ansprüche 8-11, wobei der Schritt des Fließens der Schwebeteilchen zurück zu dem Laderaum umfasst:
Verwenden von Rüttelmitteln, um die wenigstens eine Gewebeschicht zu rütteln.

13. Verfahren nach einem der Ansprüche 8-12, wobei die wenigstens eine Gewebeschicht gefaltet ist.

## Revendications

1. Drague à trémie (10) comprenant un système de trop-plein (20) destiné à évacuer l'eau d'amont située au-dessus de fractions de décantation dans un espace de chargement de dragage, le système de trop-plein comprenant :
- une entrée (22) pour accepter de l'eau d'amont ;
- un dispositif de filtration (24) avec au moins une couche filtrante (30), couplée en communication fluidique à l'entrée, de sorte que l'eau d'amont passant par l'entrée traverse la au moins une couche filtrante et que la au moins une couche filtrante filtre au moins certaines fractions en suspension depuis l'eau d'amont en laissant passer de l'eau d'amont à travers la couche filtrante mais en empêchant que les au moins certaines fractions en suspension de s'écouler de manière traversante avec l'eau d'amont ;
- une sortie de fractions (26) couplée au dispositif de filtration pour transporter les au moins certaines fractions suspendues loin du système de trop-plein et en retour jusque dans une trémie ; et
- une sortie de fluide (28) en aval du dispositif de filtration et de la sortie de fractions pour évacuer l'eau qui a été filtrée par le dispositif de filtration à partir du système de trop-plein.

2. Drague à trémie selon la revendication 1, dans laquelle le dispositif de filtration comprend au moins une couche à mailles, de préférence dans laquelle le au moins une couche à mailles comprend un tissu et/ou un matériau tissé.

3. Drague à trémie de l'une des revendications précédentes, et comprenant en outre
- des moyens pour rincer les au moins certaines fractions en suspension à partir du dispositif de filtration,
de préférence dans laquelle les moyens pour rincer les au moins certaines fractions en suspension à partir du dispositif de filtration comprennent au moins une buse (32), de manière plus préférée dans laquelle la au moins une buse peut rincer les au moins certaines fractions en suspension par pulvérisation puisée.

4. Drague à trémie selon l'une quelconque des revendications 2 et 3, dans laquelle le dispositif de filtration comprend des moyens pour faire vibrer au moins une couche à mailles.

5. Drague à trémie de l'une quelconque des revendications précédentes, dans laquelle le dispositif de filtration comprend une pluralité de couches à mailles qui sont concentriques.

6. Drague à trémie selon les revendications 2 à 5, dans laquelle au moins une couche à mailles est plissée.

7. Drague à trémie selon l'une quelconque des revendications précédentes, dans laquelle la sortie de fractions transporte les au moins certaines fractions en suspension vers l'espace de chargement de dragage.

8. Méthode de séparation de fractions en suspension à partir d'un fluide dans une drague à trémie avec un espace de chargement, la méthode comprenant les étapes consistant à :
amener le liquide à s'écouler dans un système de trop-plein à travers une entrée ;
amener tout le liquide dans le système de trop-plein à s'écouler jusque dans un dispositif de filtration couplé de manière fluidique à l'entrée pour séparer les fractions en suspension du liquide ;
amener les fractions en suspension à s'écouler à partir du dispositif de filtration à travers une sortie de fractions reliant en retour à l'espace de chargement ; et
évacuer le liquide séparé à partir du système de trop-plein.

9. Méthode selon la revendication 8, dans laquelle le dispositif de filtration comprend au moins une couche à mailles.

10. Méthode selon la revendication 8, dans laquelle l'étape consistant à amener les fractions en suspension à s'écouler jusque dans l'espace de chargement comprend l'étape consistant à :
rincer des fractions en suspension à partir du dispositif de filtration vers une sortie de fractions couplée à l'espace de chargement.

11. Méthode selon la revendication 10, dans laquelle le rinçage est effectué avec une ou plusieurs pulvérisations puisées.

12. Méthode selon l'une quelconque des revendications 8 à 11, dans laquelle l'étape consistant à amener les fractions en suspension à s'écouler en retour jusque dans l'espace de chargement comprend l'étape consistant à :
utiliser des moyens de vibration pour faire vibrer la au moins une couche à mailles.

13. Méthode selon l'une quelconque des revendications 8 à 12, dans laquelle la au moins une couche à mailles est plissée.
